**Europäisches Patentamt**

**European Patent Office**

**Office européen des brevets**

(11) Veröffentlichungsnummer: **0 431 395 A2**

# EUROPÄISCHE PATENTANMELDUNG

(21) Anmeldenummer: **90122201.8**

(51) Int. Cl.⁵: **G01N 3/52**

(22) Anmeldetag: **20.11.90**

(30) Priorität: **07.12.89 CH 4397/89**

(43) Veröffentlichungstag der Anmeldung:
**12.06.91 Patentblatt 91/24**

(84) Benannte Vertragsstaaten:
**AT BE DE DK ES FR GB IT NL SE**

(71) Anmelder: **PROCEQ S.A.**
**Riesbachstrasse 57**
**CH-8034 Zürich(CH)**

(72) Erfinder: **Dietmar, Leeb**
**Bächerweg 35**
**CH-8802 Kilchberg(CH)**
Erfinder: **Ueli, Brunner**
**Falkenstrasse 8**
**CH-8600 Dübendorf(CH)**

(74) Vertreter: **Blum, Rudolf Emil Ernst et al**
**c/o E. Blum & Co Patentanwälte Vorderberg 11**
**CH-8044 Zürich(CH)**

(54) **Vorrichtung zum Messen der Oberflächenhärte von Baumaterialien.**

(57) Um die Oberflächenhärte von Bauwerkstoffen zu messen, wird ein Prüfhammer (5) mit Federkraft gegen einen Schlagbolzen (3) bewegt, der auf der Prüffläche aufruht. Der Rücksprungweg des Hammers (5) nach dem Aufprall auf den Schlagbolzen (3) ist ein Mass für die Oberflächenhärte. Zur Bestimmung des Rücksprungweges ist der Hammer (5) an seiner Oberfläche mit einem optischen Muster (8) versehen, das mittels einer optischen Abtasteinheit (12) abgetastet wird. Aus den Abtastsignalen kann berührungslos der Rücksprungweg des Hammers bestimmt werden.

Fig.1

EP 0 431 395 A2

## VORRICHTUNG ZUM MESSEN DER OBERFLÄCHENHÄRTE VON BAUMATERIALIEN

Die Erfindung betrifft eine Vorrichtung zum Messen der Oberflächenhärte von Baumaterialien, wie zum Beispiel von Beton, wobei ein Prüfhammer vorgesehen ist, der durch Federkraft zum Aufprall auf einen Schlagbolzen bringbar ist, welcher bei der Messung auf der Prüfoberfläche aufruht, und wobei eine Messeinrichtung zum Bestimmen des Rücksprungweges des Hammers nach dem Aufprall vorgesehen ist.

Eine solche Vorrichtung ist als sogenannter Schmidthammer bekannt geworden und heute vielfach in Gebrauch. Dessen Grundprinzip ist z.B. in der CH-PS 283 099 beschrieben. Für die Messung wird, wie eingangs schon erwähnt, ein Hammer durch Federkraft zum Aufprall auf einen Schlagbolzen gebracht, der auf der Betonfläche aufgesetzt wird. Durch den Schlag des Hammers dringt der vorne kugelförmig gerundete Schlagbolzen leicht in den Beton ein, wodurch ein Teil der Schlagenergie verbraucht wird. Die noch verbleibende Energie veranlasst den Hammer danach wieder zum Rückprall gegen die Wirkung der Schlagfeder. Der Rücksprungweg des Hammers in Prozent seines Vorwärtsweges (Weg ab Wirkungsbeginn der Federkraft bis zum Aufprall auf den Schlagbolzen) wird als Rückprallwert R bezeichnet. Dieser Wert R ist ein Kennwert für das elastische und plastische Verhalten des Betons in oberflächennahen Schichten.

Vom Rückprallwert R kann unter bestimmten Voraussetzungen auf die Druckfestigkeit des Betons geschlossen werden. Dies geschieht mit Hilfe empirischer Umwertungs- bzw. Eichkurven, wobei einem be stimmten R-Wert eine bestimmte Druckfestigkeit zugeordnet wird.

Beim bekannten Schmidthammer wird der Rücksprung mechanisch durch Mitnahme eines Schleppzeigers durch den zurückprallenden Hammer gemessen.

Die obere Endstellung des Schleppzeigers ergibt dann den Rücksprungweg, der auf einer am Hammergehäuse angeordneten Strichskala abgelesen werden kann. Der auf einer Zeigerstange geführte Schleppzeiger muss bei seiner Verschiebung einen definierten Reibungswiderstand aufweisen. Dieser muss z.B. zwischen 50 g und 80 g liegen, damit einerseits der Schleppzeiger nicht über den Rücksprungweg hinaus weiterfliegt und andererseits der Hammer durch den Schleppzeiger nicht übermässig abgebremst wird. Vor allem wegen der Verschmutzung der Zeigerstange muss dieser definierte Reibungswiderstand sehr häufig kontrolliert und neu eingestellt werden. Als weiterer Nachteil ergibt sich eine relativ grobe Messwertablesung, da die Strichskala aus Gründen der Lesbarkeit nur relativ grob unterteilt werden kann. Die Ablesung und Protokollierung des Messwertes muss unmittelbar nach dem Prüfschlag erfolgen, während der Prüfhammer noch fest an die Prüfstelle gedrückt wird, um zu verhindern, dass der Schleppzeiger vor der Ablesung verschoben wird. Dies ist zumindest unhandlich und bei gewissen Schlagstellungen schwierig. Schliesslich ist eine automatische Weiterverarbeitung der Messwerte nicht möglich.

Auf diesem Hintergrund stellt sich die Aufgabe, eine Vorrichtung der eingangs genannten Art zu schaffen, mit welcher der als Kennwert eingeführte Rückprallwert R durch berührungsfreie Messung des Hammer-Rücksprungs selbsttätig bestimmt wird, wobei die erläuterten Nachteile nicht auftreten.

Die Lösung dieser Aufgabe ist in den Patentansprüchen definiert.

Nachfolgend wird anhand der beiliegenden Zeichnungen ein Ausführungsbeispiel der Erfindung näher erläutert.

Es zeigen:

Fig. 1 eine Schnittansicht der Vorrichtung, teilweise schematisch, in ihrer Ausgangslage;

Fig. 2 eine Schnittansicht wie in Fig. 1, mit gespannter Schlagfeder vor der Messung;

Fig. 3 eine Schnittansicht, wie in Fig. 1 und 2, mit dem Hammer in Aufprallstellung;

Fig. 4 eine schematische Darstellung der drei Extremstellungen des Hammers in Relation zur optischen Abtasteinheit;

Fig. 5 fünf Zeitdiagramme zur Erläuterung der Interpolation, und

Fig. 6 das Bockdiagramm einer Auswerteschaltung.

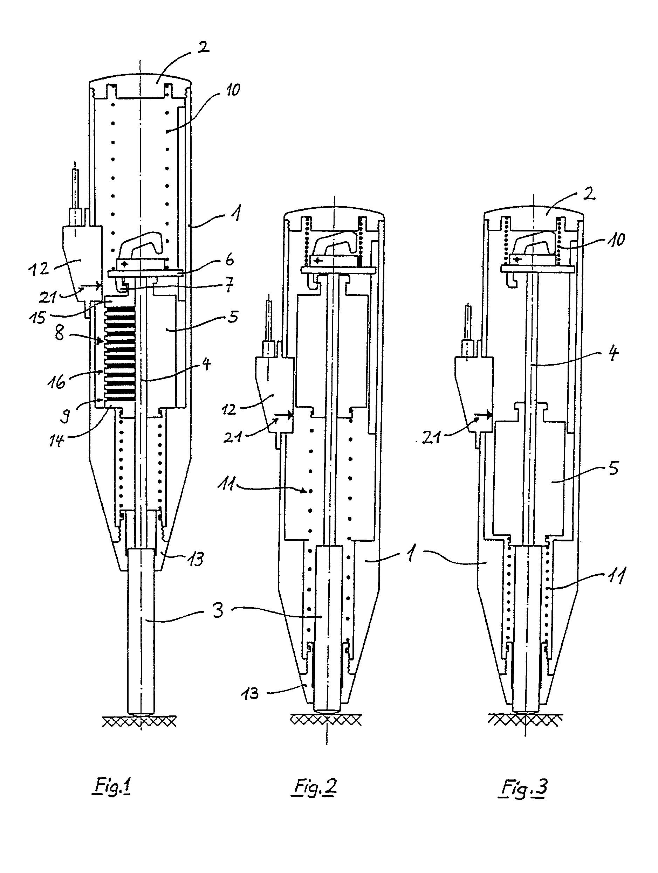

Anhand der Fig. 1 bis 3 soll zunächst der mechanische Aufbau der Messvorrichtung kurz erläutert werden. In jeder dieser Figuren ist jeweils eine Betriebsphase der Vorrichtung gezeigt, nämlich in Fig. 1 der Ausgangszustand, in Fig. 2 der Spannzustand unmittelbar vor dem Auslösen der Messung und in Fig. 3 der Zustand nach der Messung.

Die Vorrichtung besitzt einen Hammer 5, der durch die Kraft einer als Zugfeder ausgebildeten Schlagfeder 11 gegen einen Schlagbolzen 3 beschleunigbar ist. Der Schlagbolzen 3 ist verschiebbar in einer Führungshülse 13 gehalten, die vorne am Gehäuse 1 der Vorrichtung angeordnet ist. Hinten am Schlagbolzen 3 befindet sich eine Laufstange 4, auf welcher der Hammer 5 verschiebbar geführt ist. Die Laufstange 4 trägt ferner eine Führungsscheibe 6, die als Verdrehsicherung wirkt, sowie eine Klinke 7, welche zum Spannen der Schlagfeder 11 in den Hammer 5 eingreift, bis sie durch Anstossen am Gehäusedeckel 2 geöffnet wird, wodurch ein Messschlag ausgelöst wird (vgl. Fig. 2). Zwischen der Führungsscheibe 6 und dem Gehäusedeckel 2 ist ferner eine als Druckfeder ausgebildete Ladefeder 10 angeordnet, welche die Klinke 7, zusammen mit der Laufstange und dem Schlagbolzen 3, nach jeder Messung in ihre vordere Ausgangslage drückt (Fig. 1), wo sie zum nächsten Spannen wieder in den Hammer 5 eingreift. Dieser Aufbau entspricht demjenigen der bereits bekannten Betonprüfgeräte und braucht deshalb nicht in mehr Details beschrieben zu werden.

Im Gegensatz zu herkömmlichen Geräten ist nun der Hammer 5 an seiner zylindrischen Aussenfläche über seine Länge mit einem optischen Muster 8 versehen.

Ein solches Muster besteht im wesentlichen aus aufeinanderfolgenden, gleich breiten Streifen an der Hammeroberfläche, die abwechselnd lichtreflektierend und nicht-lichtreflektierend sind. Im gezeigten Ausführungsbeispiel folgen sich rillenartige Vertiefungen 9 mit lichtabsorbierender Einfärbung und nicht vertiefte Mantelzonen 16 mit reflektierender Beschichtung. Dabei sind in Fig. 1 die Rillen lediglich schematisch dargestellt. In Wirklichkeit ist die Zonen- bzw. Rillenbreite wesentlich kleiner, z.B. 0.40 mm, und es sind insgesamt ca. 29 Rillen 9 bzw. 30 reflekierende Zonen 16 vorgesehen. Es ist von Vorteil, das Muster nicht wesentlich feiner auszugestalten, um auch bei Verschmutzung eine einwandfreie optische Detektion sicherzustellen. Die Messgenauigkeit kann mittels Interpolation aber wesentlich unter die Feinheit des Musters gehen, wie noch erläutert wird.

Auf dem Gehäuse 1 ist als optische Abtasteinheit ein Infrarot-Lichtsender/Sensor 12 vorgesehen. An der mit einem Pfeil 21 bezeichneten Stelle ist eine quer zur Bewegungsrichtung des Hammers verlaufende Schlitzblende angeordnet, deren Lage den Messnullpunkt bestimmt. Durch diese Schlitzblende hindurch wird das Muster von einer Infrarotdiode in einem bestimmten Einfallswinkel beleuchtet. Im Reflexionswinkel dazu ist ein Infrarot-Lichtsensor angeordnet, in welchem das durch die Schlitzblende hindurch reflektierte Infrarotlicht in ein elektrisches Signal umgewandelt wird.

Bewegt sich der Hammer 5 mit dem optischen Muster 8 vor dieser optischen Abtasteinheit vorbei, so "sieht" der Sensor abwechselnd hell und dunkel, womit die Anzahl Streifen des Musters gezählt werden können, die sich vor der Abtasteinheit durchbewegt haben.

Springt der Hammer 5 nach einem Schlag auf den Schlagbolzen 8 aus der in Fig. 3 gezeigten Lage zurück, so kann der Rücksprungweg anhand dieses Signals bestimmt werden, wie noch näher erläutert wird.

Dabei ist es von Vorteil, wenn die Streifen nicht bloss gezählt werden, sondern wenn vielmehr für jeden Streifen des Musters eine Zeit gemessen wird, die im wesentlichen der Zeit entspricht, während der jeweils durch die Schlitzblende ein Reflexionssignal (bzw. kein Signal) empfangen wird. Dafür ist ein Zeitzähler vorgesehen, der gestartet wird, sobald der Lichtsensor "hell" sieht. Der Zähler läuft so lange, wie der Lichtsensor "hell" sieht. Sobald er "dunkel" sieht, wird der Zähler gestoppt und praktisch gleichzeitig neu gestartet. Der Zähler wird somit - ausser beim 1. Start - immer am Ende jedes hellen und jedes dunklen Streifens gestoppt und neu gestartet. Zur Triggerung des Zählers dient ein Schmitt-Trigger 22, der mit dem Sensor 21 verbunden ist und dessen Arbeitspunkt etwa beim Nulldurchgang des wellenförmig verlaufenden Sensorsignals liegt. Auf diese Weise wird für jeden Streifen des Musters ein eigener Zählstand erzeugt und gespeichert. Im Ergebnis liegen damit Zählstandsfolgen als Messresultat vor, welche der weiteren Auswertung zugrunde gelegt werden können.

In Fig. 6 ist die Schaltung angedeutet, in welcher der Lichtsensor 21 über einem Schmitt-Trigger 22 mit einem als Zähler wirkenden Mikrocomputer 23 verbunden ist, der auch für die Speicherung und Auswertung der Zählstandsfolgen sorgt. Der so bestimmte R-Wert wird über eine Anzeigeeinheit 24 ausgegeben.

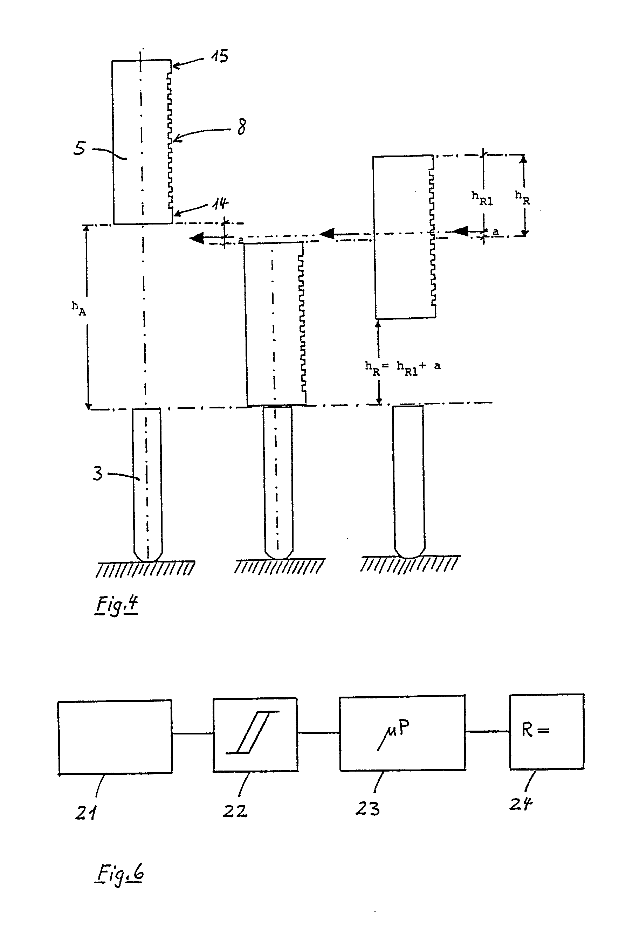

Die erwähnte Zeitzählung erlaubt eine vorteilhafte Auswertung der Messresultate, wie noch näher erläutert wird. Dazu soll zunächst anhand von Fig. 4 ein Messablauf erläutert werden. In dieser Figur ist jeweils der Hammer 5 und der Schlagbolzen 3 gezeigt, und zwar (von links nach rechts) mit dem Hammer im Moment der Schlagauslösung, beim Schlag und am Ende des Rücksprungs. Dabei bezeichnet $h_A$ den Vorwärtsweg und $h_R$ den Rücksprungweg des Hammers. Der Rückprallwert R ergibt sich dann als R = 100 * $(h_R/h_A)$

Mit Pfeil ist die Lage des Lichtsensors 21 angedeutet. Der Weg $h_{R1}$ ist demzufolge der vom Lichtsensor gemessene Rücksprungweg des Hammers. Der wirkliche Rücksprungweg ergibt sich jedoch erst durch Addition einer Justiergrösse a zum Wert $h_{R1}$. Die Justiergrösse a ist vom Montageort des Sensors 21 am Gehäuse abhängig und kann durch Zeitmessung justiert werden, wie noch beschrieben wird.

Wie sowohl in Fig. 1, als auch in Fig. 4 angedeutet, ist das Muster 8 auf dem Hammer 5 beidseitig durch je eine reflektierende Zone 14,15 grösserer Breite begrenzt. Diese Zonen besitzen vorzugsweise etwa die dreifache Ausdehnung der restlichen Streifen des Musters. Damit ist ein sicheres Triggern des Start-Stopp-Zählers auf Beginn bzw. Ende des Hammers 5 auch dann gewährleistet, wenn diese Partien z.B. infolge mehrmaligem Ein- und Ausbauen des Hammers zu Wartungszwecken teilweise beschädigt oder unbeabsichtigt verschmutzt sind.

Nach dem Auslösen des Schlages bewegt sich der Hammer 5 zunächst nach unten am Sensor 21 vorbei. Dabei entsteht ein Signalmuster von aufeinander folgenden 30 "Hell"- und 29 "Dunkel" - Signalen (Zeitzählwerten), wobei das erste und das letzte "Hell" - Signal deutlich länger ist als die jeweils benachbarten Signale. Wird in dieser ersten Phase der Messung, d.h. der Aufprallphase, nicht dieses Signalmuster festgestellt, deutet dies auf einen Fehler der Vorrichtung hin, z.B. auf eine Verschmutzung des optischen Musters, womit keine korrekte Messung des Rücksprungweges mehr möglich ist. Deshalb wird in solchen Fällen die Messung durch die Auswerteschaltung verworfen. Andernfalls wird die nachfolgende Messung des Rücksprungswegs akzeptiert.

Aus den Teilzählzeiten während der Aufprallphase nahe vor dem Aufprall kann bei bekannter Länge der einzelnen Streifen des Musters die Geschwindigkeit des Hammers beim Aufprall und damit die Aufprallenergie gemessen und dauernd kontrolliert werden. Damit ist sichergestellt, dass die Messung immer innerhalb eines normierten Bereiches der Aufprallenergie stattfindet, ansonsten die Vorrichtung (insbesondere die Schlagfeder 11) überprüft werden muss.

Wie sich aus der mittleren Darstellung in Fig. 4 ersehen lässt, "sieht" der Sensor 21 kurz vor und auch kurz nach dem Aufprall den Hammer 5 überhaupt nicht. Diese Zeit zwischen dem Ende des letzten (längeren) "Hell" - Signals und dem Beginn desselben "Hell" - Signals in umgekehrter Bewegungsrichtung wird als Umkehrzeit $T_u$ gemessen. Diese zeigt bei der Auswertung den Beginn des Rücksprungs an und ist zudem ein Mass für die Justiergrösse a. Die Grösse a kann deshalb gemäss der jeweils gemessenen Umkehrzeit $T_u$ bei der Auswertung rechnerisch korrigiert werden, so dass eine mechanische Justierung des Sensors 21 am Gehäuse 1 entfällt.

Wird in der Rücksprungphase das erste, längere "Hell" - Signal festgestellt, beginnt die Messung so vieler "Hell" - und "Dunkel" - Signale, bis der Hammer am Ende seines Rücksprungwegs bei der Bewegungsumkehr (ganz kurz) stillsteht. Nahe am Ende des Rücksprungwegs sowie direkt nach der Bewegungsumkehr treten die grössten Zeitzählungen auf, wonach wieder kürzere Zeiten gemessen werden.

Das Maximum der Zeitzähldauern entspricht somit im wesentlichen dem oberen Umkehrpunkt am Ende des Rücksprungweges. Wird nun festgestellt, wo in der beim Rücksprung augenommenen Folge von Zeitzählsignalen dieses Maximum auftritt, so kann der Signalfolge die entsprechende Stelle auf dem Muster 8 exakt zugeordnet werden, womit der Rücksprungweg $h_{R1}$ des Hammers 5 bestimmt ist.

Wie bereits erwähnt, ist die Unterteilung des Musters 8 nicht allzu fein gewählt, um die optische Abtastung nicht verschmutzungsanfällig werden zu lassen. Um eine grössere Messgenauigkeit als die gewählte Unterteilung von z.B. 0.40 mm zu erhalten, kann deshalb zur Bestimmung des exakten Umkehrpunktes am Ende des Rücksprungweges eine Interpolation auf der Grundlage der gemessenen Zeitzählwerte vorgenommen werden.

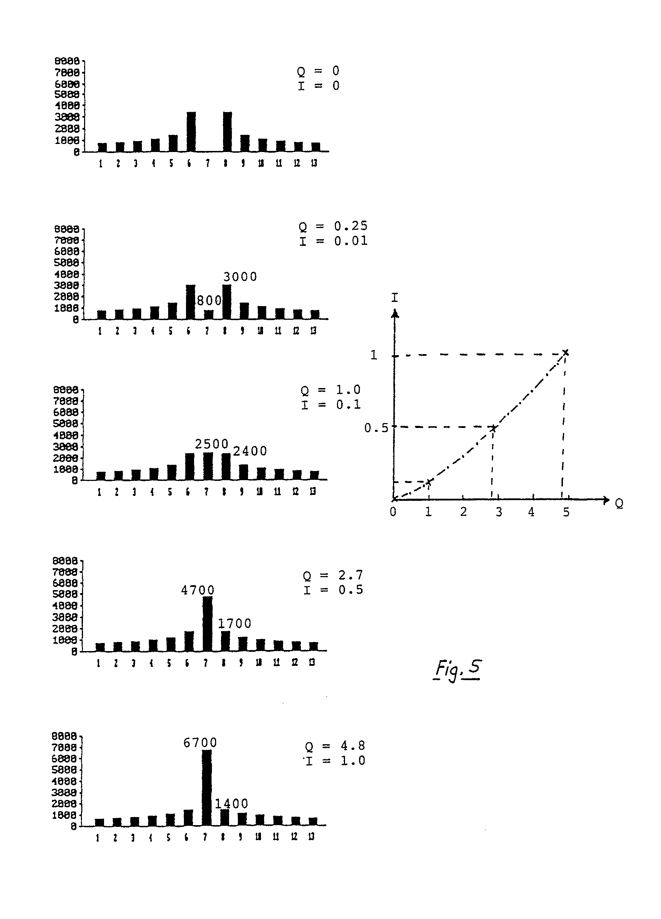

In Fig. 5 sind zur Erläuterung einer solchen Interpolation schematisch in fünf Diagrammen die Zeitzählwerte von fünf fiktiven Schlagversuchen mit einem jeweils etwa bei Streifen Nr. 7 liegenden, maximalen Zeitzählwert aufgetragen. Auf der vertikalen Achse jedes Diagrammes ist der jeweilige Zählwert angegeben, der zu jeder der horizontal aufgetragenen Streifennummern gehört.

Im obersten Diagramm wird der Streifen Nr. 7 gerade noch nicht erreicht, während in den nach unten folgenden Diagrammen jeweils im Bereich des Streifens Nr. 7 eine zunehmende Höhe erreicht wird, wie sich aus den zunehmenden Zeitzählwerten ergibt. Im letzten Diagramm wird die gesamte Streifenbreite, d.h. 0,40 mm, vom Sensor detektiert. Entsprechend den Zeitzählwerten bei Streifen Nr. 7 im Vergleich zu den benachbarten Zeitzählwerten, kann nun interpoliert werden. Als Interpolationsmass eignet sich z.B. der Quotient des Zeitzählwerts im zu interpolierenden Bereich (Streifen Nr. 7) zum Zeitzählwert des Nachbarbereichs (z.B. Streifen Nr. 8). Aus diesem Quotienten Q kann mittels einer empirischen, gespeicherten Interpolationskurve der Bruchteil der Streifenbreite am Ende des Rücksprungwegs bestimmt werden, die vom Sensor noch erfasst wurde. Es könnten aber durchaus auch andere, numerische Interpolationsmethoden verwendet werden.

Damit lässt sich der Rücksprungweg mit wesentlich grösserer Genauigkeit messen, als dies der Einteilung des optischen Musters auf dem Hammer 5 entspricht.

Eine weitere, vorteilhafte Folge der erläuterten Zeitzählungen über die einzelnen "hellen" und "dunklen" Streifen des Musters besteht darin, dass sich damit der Hell-Dunkel-Kontrast des Musters überwachen lässt, und zwar durch Bildung des Quotienten zwischen den Hell- und Dunkelzeiten $T_{HELL}/T_{DUNKEL}$. Ist dieser Quotient etwa 1, so ist der Kontrast gut. Nehmen die Dunkelzeiten zu, d.h. wird der Quotient wesentlich kleiner als 1, so lässt dies auf abnehmenden Kontrast, d. h. auf eine Verschmutzung des optischen Musters schliessen. Der Benutzer wird beim Erreichen eines bestimmten Minimalwertes zum Reinigen des optischen Musters aufgefordert.

Mit der beschriebenen Vorrichtung gelingt es, trotz harter Einsatzbedingungen einwandfreie, exakte Messungen des Rückprallwertes R zu erzielen. Insbesondere haben die starken mechanischen Erschütterungen und Vibrationen beim Schlag keine negativen Auswirkungen auf die berührungslose Messung. Auch die Verschmutzungseinflüsse durch Betonstaub und inneren Abrieb in der Vorrichtung können mit den beschriebenen Massnahmen beherrscht werden.

## Ansprüche

1. Vorrichtung zum Messen der Oberflächenhärte von Bauwerkstoffen, mit einem Gehäuse (1), in welchem ein Prüfhammer (5) vorgesehen ist, der durch Federkraft zum Aufprall auf einen Schlagbolzen (3) bringbar ist, welcher bei der Messung auf der Prüfoberfläche aufruht, und wobei eine Messeinrichtung (12) zum Bestimmen des Rücksprungweges des Hammmers nach dem Aufprall vorgesehen ist, dadurch gekennzeichnet, dass der Hammer mindestens über einen Teil seiner Länge und seines Umfanges mit einem optischen Muster (8) versehen ist und dass am Gehäuse eine optische Abtasteinheit angeordnet ist, wobei mindestens beim Rücksprung des Hammers das Muster durch die optische Abtasteinheit (21) abtastbar und daraus die Lage des Umkehrpunktes des Hammers am Ende des Rücksprungweges ableitbar ist.

2. Vorrichtung nach Anspruch 1, dadurch gekennzeichnet, dass die optische Abtasteinheit (21) einen Lichtsender und einen benachbart angeordneten Lichtsensor besitzt und dass das Muster (8) auf dem Hammer abwechselnd aus Zonen (16) gebildet ist, die das Licht des Lichtsenders zum Lichtsensor reflektieren und aus Zonen (9), die dieses im wesentlichen nicht zum Lichtsensor reflektieren.

3. Vorrichtung nach Anspruch 2, dadurch gekennzeichnet, dass an den im wesentlichen nicht reflektierenden Zonen rillenartige, vorzugsweise lichtabsorbierend ausgebildete Vertiefungen (9) in der Hammeroberfläche vorgesehen sind.

4. Vorrichtung nach einem der Ansprüche 2 oder 3, dadurch gekennzeichnet, dass der Lichtsender und der Lichtsensor im Infrarot-Lichtwellenbereich arbeiten und dass der Hammer (8) an den optisch stark reflektierenden Zonen (16) mit einer Infrarotreflektorschicht versehen ist.

5. Vorrichtung nach einem der vorangehenden Ansprüche 2 bis 4, dadurch gekennzeichnet, dass die optische Abtasteinheit (21) mit einer Auswerteschaltung (22,23) verbunden ist, in welcher ein Zeitzähler jeweils beim Uebergang von einer optisch stark zu einer optisch schwach reflektierenden Zone (9,16) und umgekehrt gestoppt und unmittelbar darauf wieder gestartet wird, und welche einen Speicher zur Aufnahme der gemessenen Zeitzählwerte und einen Rechner zur Auswertung der gemessenen und gespeicherten Zeitzählwerte besitzt.

6. Vorrichtung nach Anspruch 5, dadurch gekennzeichnet, dass die Auswerteschaltung (22) einen Rechner (23) aufweist, der aus den Zeitzählwerten mittels einem Interpolationsalgorithmus den Umkehrpunkt des Hammers genauer als die Länge der einzelnen, stark bzw. schwach reflektierenden Zonen des Musters bestimmt.

7. Vorrichtung nach Anspruch 5, dadurch gekennzeichnet, dass die optische Abtasteinheit (21) derart am Gehäuse (1) angeordnet ist, dass sie bezüglich des Hammers (8) so positioniert ist, dass er in seiner Aufprallage unter die Abtasteinheit gelangt, wobei der entsprechende Abstand (a) aus den Zeitzählwerten der Umkehr des Hammers beim Aufprall ermittelbar und zur rechnerischen Justierung der Position der Abtasteinheit zur Definierung der Lage des Anfangspunktes des Rücksprungwegs verwertbar ist.

8. Vorrichtung nach einem der Ansprüche 2 bis 7, dadurch gekennzeichnet, dass das Muster (8) mindestens an seinem vom Schlagbolzen (3) abgewandten Ende zum sicheren Triggern der optischen Abtasteinheit eine Zone grösserer Ausdehnung (15) als die übrigen Zonen besitzt.

9. Vorrichtung nach Anspruch 8, dadurch gekennzeichnet, dass das Muster beidseitig an jedem Ende eine Zone grösserer Ausdehnung (14,15) besitzt.

10. Vorrichtung nach einem der vorangehenden Ansprüche, dadurch gekennzeichnet, dass die optische Abtasteinheit (21) derart am Gehäuse (1) angeordnet ist, dass das Muster (8) bei der Bewegung des Hammers (5) gegen den Schlagbolzen vor dem Aufprall ein erstes Mal vollständig sowie beim Rücksprung entsprechend dem Rücksprungweg ein zweites Mal über einen Teil seiner Länge abtastbar ist, wobei die Auswertung der zweiten Abtastung nur erfolgt, wenn bei der ersten Abtastung das Muster vollständig aufgenommen wurde.

11. Vorrichtung nach einem der Ansprüche 5 bis 7, dadurch gekennzeichnet, dass die optische Abtasteinheit (21) derart am Gehäuse angeordnet ist, dass sie bezüglich dem Hammer (8) so positioniert ist, dass sein Muster (8) bis kurz vor seinem Aufprall auf dem Schlagbolzen abtastbar ist, wobei aus den gemessenen Zeitzählwerten die Geschwindigkeit des Hammers beim Aufprall in der Auswerteschaltung (22,23) bestimmbar ist und wobei die Messung bei zu starker Abweichung von einer Normgeschwindigkeit verwerfbar ist.

12. Vorrichtung nach einem der Ansprüche 5 bis 7, dadurch gekennzeichnet, dass mittels der Auswerteschaltung (22,23) die in den stark reflektierenden Zonen (16) gemessenen Zeitzählwerte mit denjenigen der schwach reflektierenden Zonen (9) vergleichbar sind und dass bei starker Abweichung eine Störungsmeldung erzeugbar ist.

_Fig.1_          _Fig.2_          _Fig.3_

Fig.4

Fig.6

Fig. 5